Europäisches Patentamt

European Patent Office

Office européen des brevets

(19)

(11) Veröffentlichungsnummer : **0 090 070**
B1

(12) # EUROPÄISCHE PATENTSCHRIFT

(45) Veröffentlichungstag der Patentschrift : **16.04.86**

(21) Anmeldenummer : **82105250.3**

(22) Anmeldetag : **15.06.82**

(51) Int. Cl.⁴ : **B 62 J   7/00**, B 62 J   1/14

(54) **Halterungseinrichtung für Motorräder.**

(30) Priorität : **26.03.82 DE 3211308**

(43) Veröffentlichungstag der Anmeldung :
**05.10.83 Patentblatt 83/40**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**DE-U- 7 707 615
DE-U- 8 116 262
GB-A- 2 066 751
US-A- 4 230 245
US-A- 4 269 335**

(73) Patentinhaber : **KRAUSER Kraftfahrzeug-Zubehör
Vertriebs-GmbH
Hörmannsbergerstrasse 18
D-8905 Mering (DE)**

(72) Erfinder : **Krauser, Michael
Obere Bahnhofstrasse 56-60
D-8034 Germering (DE)**

(74) Vertreter : **von Kirschbaum, Albrecht, Dipl.-Ing.
Hermann-Ehlers-Strasse 21a
D-8034 Germering (DE)**

EP 0 090 070 B1

**Beschreibung**

Die Erfindung betrifft eine Halterungseinrichtung für Motorräder, zum Anbringen von Packtaschen und Gepäckstükken sowie von Blinkern, Katzenaugen u. ä. nach dem Oberbegriff des Anspruchs 1.

Eine derartige aus dem DE-U-57 707 615 bekannte Halterungseinrichtung weist je eine rechte und linke seitliche Packtaschenhalterung, zwei daran befestigte Rahmenteile, eine die Rahmenteile verbindende und an diesen angebrachte Gepäckbrücke sowie eine verstellbare, an den Packtaschenhalterungen angebrachte Querverstrebung auf. Bei dieser bekannten Halterungseinrichtung ist die zwischen den Rahmenteilen angebrachte Gepäckbrücke fest mit den Rahmenteilen verbunden. Wenn diese bekannte Halterungseinrichtung an einem Motorrad angebracht ist, kann bei den meisten Ausführungen eine an den Motorrädern vorgesehene, hochklappbar ausgebildete Sitzbank in vielen Fällen praktisch überhaupt nicht hochgeklappt werden oder sie kann allenfalls nur etwas angehoben werden. Da jedoch unter der Sitzbank im allgemeinen das Werkzeug und in vielen Fällen auch die Batterie untergebracht ist, muß, um ungehinderten Zugang zu diesen Teilen zu haben, die Sitzbank hochgeklappt werden können. Bei der bekannten Halterungseinrichtung muß dann jedoch, um die Sitzbank vollständig aufklappen zu können, die zwischen den Rahmenteilen der Halterungseinrichtung angebrachte Gepäckbrücke abgeschraubt werden, was ausgesprochen lästig, mühsam und zeitaufwendig ist. Sobald dann das Werkzeug und-/oder die Batterie- und andere Teile, wie beispielsweise Handschuhe u. ä. wieder unter der Sitzbank verstaut und diese wieder heruntergeklappt ist, muß die Gepäckbrücke wieder mit den Rahmenteilen der Halterungseinrichtung verschraubt werden, was genauso lästig und zeitaufwendig wie das Abnehmen der Gepäckbrücke ist.

In der DE-U-8 116 262 ist ein in Länge und Breite stufenlos verstellbarer Motorradgepäckträger beschrieben, der als tragende Basis für alle anderen Anbauteile zwei Packtaschenhalterungs-Seitenteile aufweist, die über mehrere Querverbindungsrohre in Form von teleskopartig verschiebbaren Rohren miteinander verbunden sind. Ferner sind an der Oberseite jedes der Packtaschenhalterungs-Seitenteile jeweils eine Lochleiste angebracht, an welcher der Gepäckbrückenoberteil abgestützt und in Längsrichtung verstellbar mittels Schrauben befestigbar ist.

Aus der US-A-4 269 335 ist eine Motorrad-Gepäckträger mit einer Auflagebrücke zum Aufnehmen des Gepäcks bekannt, wobei unter der Aufnahmebrücke ein Träger zum Halten der Brücke und damit des gesamten Gepäckträgers vorgesehen ist. Mit Hilfe dieses Trägers ist die Gepäckbrücke an einem Motorrad befestigbar. Ferner ist jede Seite der Auflagebrücke über ein Paar im Abstand voneinander angeordneter Glieder verschwenkbar mit dem Träger verbunden, so daß die Brücke in vordere und hintere Stellungen gebracht werden kann. Darüber hinaus sind mindestens ein Verriegelungsteil oder ein Anschlag vorgesehen, um den Gepäckträger in jeder der möglichen Stellungen halten und verriegeln zu können.

In Weiterentwicklung dieses Standes der Technik ist es Aufgabe der Erfindung, eine stabile, bruchsichere Halterungseinrichtung mit Gepäckbrücke für Motorräder unterschiedlicher Breite zu schaffen, bei welcher zum Hochklappen einer Motorrad-Sitzbank die Gepäckbrücke nicht abgenommen zu werden braucht. Gemäß der Erfindung ist dies bei einer Halterungseinrichtung für Motorräder nach dem Oberbegriff des Anspruchs 1 durch die Merkmale im kennzeichnenden Teil des Anspruchs 1 erreicht. Vorteilhafte Weiterbildungen der Erfindung sind in den Unteransprüchen angegeben.

Zur Schaffung einer stabilen, hochfesten Halterungseinrichtung ist die erfindungsgemäße Halterungseinrichtung aus einem widerstandsfähigen, bruchfesten Kunststoff, wie beispielsweise Polyamid 6 hergestellt, das mit 30 bis 33 % Glasfasern verstärkt ist.

Um zum Hochklappen einer Motorrad-Sitzbank die Gepäckbrücke der Halterungseinrichtung nicht abnehmen zu müssen, sind bei der erfindungsgemäßen Ausführung einer Halterungseinrichtung die an deren Packtaschenhalterung angebrachten Rahmenteile, die nach Lösen von Befestigungsschrauben (in Fahrtrichtung gesehen) nach hinten verschiebbar sind, sowie die Packtaschenhalterungen selbst so ausgebildet, daß, in der üblichen Fahrtrichtung eines Motorrads gesehen, an welchen die erfindungsgemäße Halterungseinrichtung angebracht ist, nach Lösen der Befestigungsschrauben und nach Verschieben der beiden seitlichen Rahmenteile in jeweils zwei in den zugeordneten Packtaschenhalterungen ausgebildeten Führungen nach hinten, die zwei Rahmenteile zusammen mit der diese verbindenden Gepäckbrücke nach hinten umklappbar sind. Hierzu sind die zwei Führungen, in welchen die gelockerten Befestigungsschrauben gleiten, (in Fahrtrichtung gesehen) jeweils am hinteren oberen Ende in den Packtaschenhalterungen ausgebildet.

Wenn somit der Motorradfahrer die Motorrad-Sitzbank aus irgendeinem Grund hochklappen will, braucht er bei der erfindungsgemäßen Halterungseinrichtung nur die Befestigungsschrauben zu lockern, dann die beiden Rahmenteile nach hinten zu verschieben und sie zusammen mit der sie verbindenden Brücke nach hinten unten zurückzuklappen; hierdurch hat er dann einen ungehinderten freien Zugang zu der Sitzbank und nach deren Hochklappen zu beispielsweise unter der Sitzbank untergebrachtem Werkzeug, unter Umständen zu der unter der Sitzbank untergebrachten Batterie oder auch zu unter der Sitzbank angeordneten Teilen, wie Handschuhen u. ä. Wenn dann der Motorradfahrer die dem Raum unter der Sitzbank entnommenen Teile nicht mehr benötitgt und wieder unter der Sitzbank verstaut hat, braucht er die Sitzbank nur wieder vorzuklappen, die Rahmenteile samt Gepäckbrücke hochzuklappen und nach vorne zu schieben und dann die Befestigungsschrauben wieder anzuziehen.

Somit ist das Hochklappen der Sitzbank und damit ein freier ungehinderter Zugang zu den unter der Sitzbank untergebrachten Teile sehr viel leichter möglich und bei weitem nicht mehr so mühsam und zeitaufwendig wie bei der herkömmlichen Halterungseinrichtung, bei welcher die Gepäckbrücke vollkommen abgenommen werden mußte.

Wenn ein Motorradfahrer nach dem Hochklappen der Rahmenteile und der Gepäckbrücke vergessen hat, die Befestigungsschrauben wieder anzuziehen, oder wenn er sie nicht fest genug angezogen hat, könnte es während einer anschließenden Fahrt zu einem unbeabsichtigten Zurückklappen der Rahmenteile samt der Gepäckbrücke sowie der auf dieser angebrachten Teile kommen. Um ein solches unbeabsichtigtes und nicht ungefährliches Zurückklappen der Rahmenteile und der Gepäckbrücke zu verhindern, ist gemäß einer bevorzugten Ausführungsform der Erfindung an jeder Packtaschenhalterung ein elastisch verformbares Sicherungsteil angebracht, welches nach dem Vorklappen der Gepäckbrücke und nach dem Vorschieben der Rahmenteile hinter einen am vorderen Ende jedes unteren Verlängerungsteils des Rahmenteils ausgebildeten Ansatzes und zwischen der Unterseite des unteren Verbindungsteils jedes Rahmenteils und der Oberseite des oberen Verbindungsteils jeder Packtaschenhalterung einzuschieben ist. Durch die elastisch federnde Ausbildung des Sicherungsteils ist es sicher an der vorstehend beschriebenen Stelle untergebracht und gehaltert. Falls an und in den Packtaschenhalterungen Motorradkoffer angebracht sind, ist ein Herausfallen der Sicherungsteile zusätzlich durch den eingehängten und befestigten Koffer verhindert.

Damit die erfindungsgemäße Packtaschenhalterung auch bei möglichst vielen, unterschiedlich breiten Motorrädern verwendet werden kann, sind gemäß einer weiteren vorteilhaften Ausbildung der Erfindung auf der Unterseite der Gepäckbrücke schlitzförmige Ausnehmungen vorgesehen, in welche von außen Sicherungsmuttern einschiebbar sind, so daß dadurch die Breite der Halterungseinrichtung in einem Bereich zwischen 27 cm und 34 cm veränderbar ist. Durch Einlegen, Verschieben und entsprechendes Sichern von Verlängerungsplättchen in die bzw. den für die Sicherungsmuttern vorgesehen Schlitze(n) auf den Längsseiten der Gepäckbrücke kann die Breite der Halterungseinrichtung nochmals zwischen 34 cm bis 41 cm variiert werden ; d. h. durch Vorsehen der schlitzförmigen Ausnehmungen an der Gepäckbrücken-Unterseite und durch Einführen und Verschieben der Sicherungsmuttern bzw. der Verlängerungsplättchen kann somit die Breite der erfindungsgemäßen Halterungseinrichtung insgesamt in einem Bereich von 27 cm bis 41 cm verändert werden.

Die Erfindung wird nunmehr anhand von bevorzugten Ausführungsformen unter Bezugnahme auf die anliegenden Zeichnungen im einzelnen erläutert. Es zeigen :

Figur 1 eine perspektivische Ansicht einer zusammengebauten Halterungseinrichtung gemäß der Erfindung ;

Figur 2 eine schematische Seitenansicht der Halterungseinrichtung der Fig. 1, wobei der heruntergeklappte Zustand von Rahmenteilen und einer Gepäckbrücke strichpunktiert wiedergegeben ist ;

Figur 3 eine vergrößerte Darstellung von Führungen und eines Aufnahmebereichs am oberen hinteren Teil einer Packtaschenhalterung der Halterungseinrichtung nach Fig. 1 ;

Figur 3a eine Schnittansicht durch den Aufnahmebereich der Fig. 3 entlang einer A-A ;

Figur 4 eine vergrößerte Darstellung des unteren Teils eines Rahmenteils der Halterungseinrichtung nach Fig. 1, und

Figur 5 eine schematische perspektivische Darstellung einer Verbreiterung einer Halterungseinrichtung.

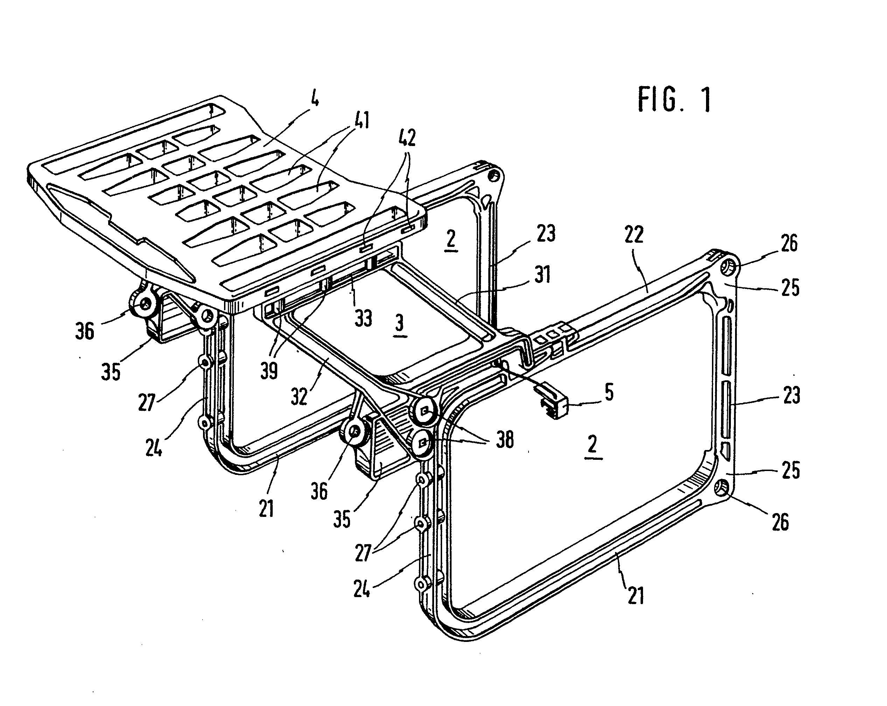

In den Figuren 1 bis 5 sind gleiche bzw. einander entsprechende Teile mit denselben Bezugszeichen bezeichnet. Bezüglich der Offenbarung der Erfindung wird wegen deren großen Klarheit und Anschaulichkeit ausdrücklich auf die Zeichnungen bezug genommen.

Die in ihrer Gesamtheit mit 1 bezeichnete Halterungseinrichtung weist jeweils zwei seitliche Packtaschenhalterungen 2, zwei daran befestigte Rahmenteile und eine die Rahmenteile verbindende und an ihnen angebrachte Gepäckbrücke 4 auf. Eine nicht näher dargestellte, verstellbare, und der Breite des jeweiligen Motorradtyps anpaßbare Querverstrebung ist mittels Schrauben in Bohrungen 27 im hinteren Verbindungsteil 24 jeder Packtaschenhalterung 2 befestigt. Mittels dieser Schrauben sind auch nach außen vorstehende, ebenfalls nicht dargestellte Halterungszunge befestigt, die in das an einem Motorradkoffer angebrachte Schloß eingeführt werden, um in die Packtaschenhalterung 2 eingehängte Koffer in diesen zu halten und zu sichern.

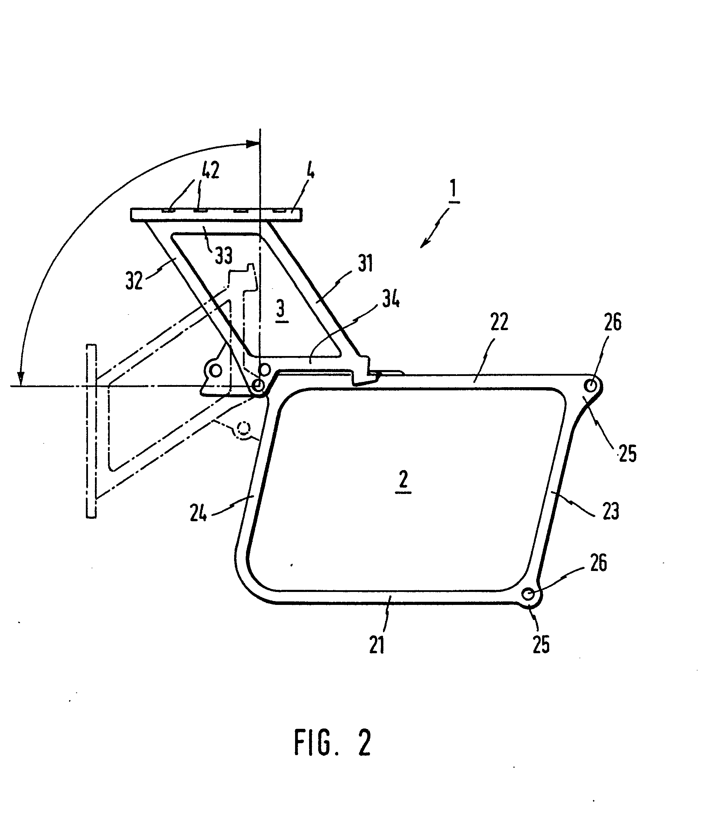

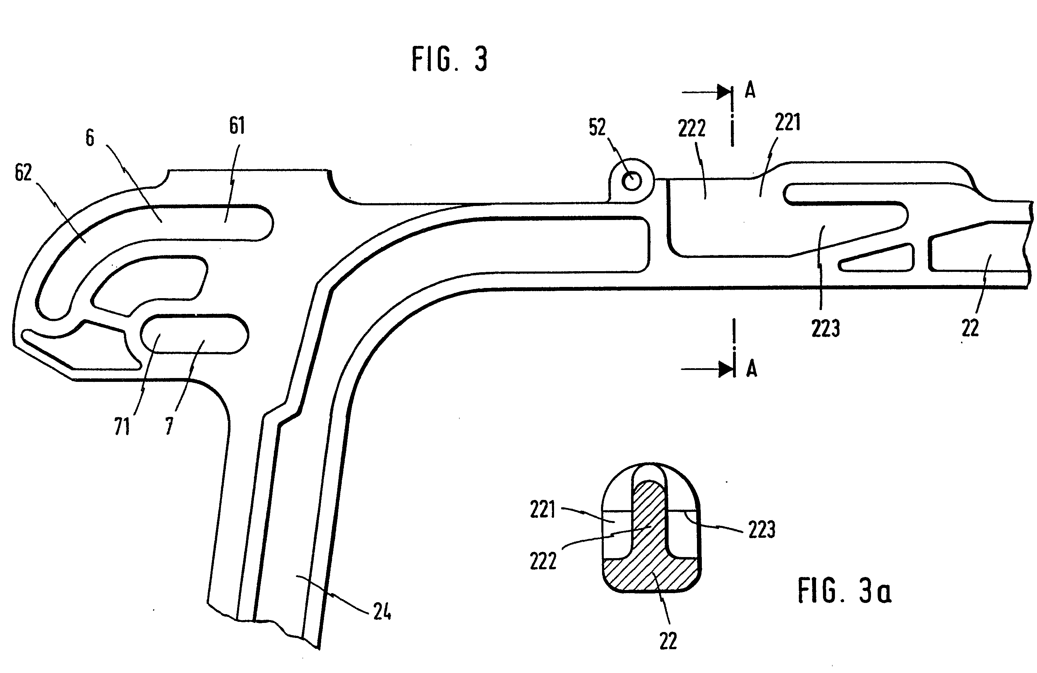

Die Packtaschenhalterungen 2 weisen sowohl in der perspektivischen Darstellung der Fig. 1 als auch in der Draufsicht der Fig. 2 im wesentlichen in etwa die Form eines Parallelogrammes, auf, wobei obere und untere Verbindungsteile 21 und 22 etwa waagrecht und vordere sowie hintere Verbindungsteile 23 und 24 leicht schräg, etwa unter einem Winkel in der Größenordnung von 10° zur Senkrechten verlaufen. Ferner sind an den vorderen abgerundeten Ecken 25 Bohrungen 26 für eine Befestigung an zu einem Motorradrahmen führenden Teilen vorgesehen. Hierbei sind die etwa waagrecht verlaufenden Verbindungsteile 21 und 22 sowie das hintere, leicht schräge Verbindungsteil 24 der Packtaschenhalterungen 2 etwa in einer doppelten T-Form ausgebildet, während das vordere, leicht schräge Verbindungsteil 23 im Querschnitt T-förmig ist. Am in Fahrtrichtung gesehenen oberen, hinteren Ende des oberen Verbindungsteils der Packtaschenhalterung 2 sind Führungen 6 und 7 sowie ein Aufnahmebereich 221 ausgebildet, was im einzelnen genauer in Fig. 3 dargestellt ist.

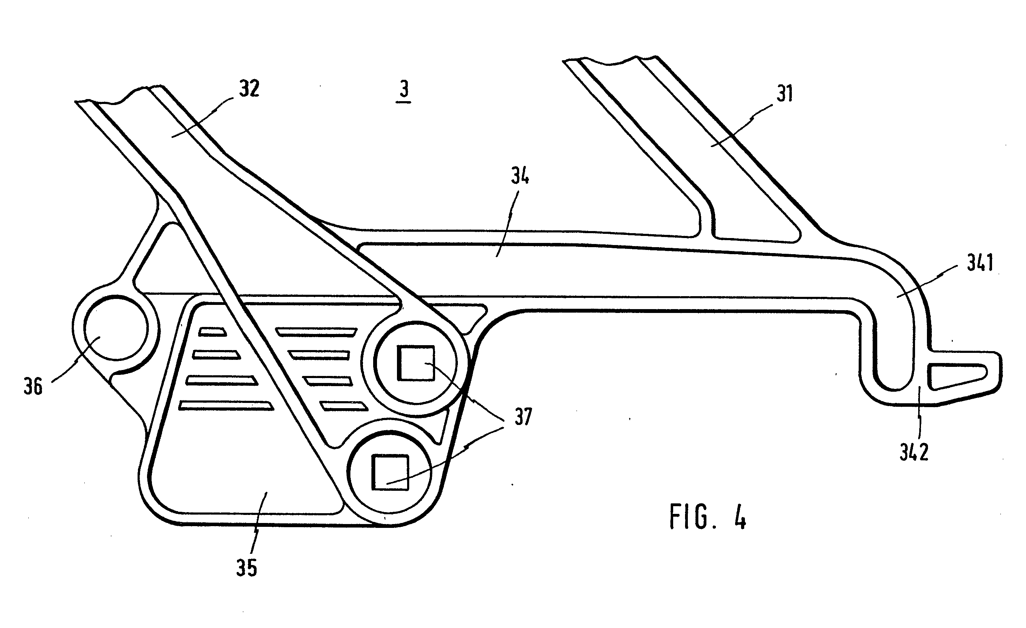

Die Rahmenteile 3 sind, wie aus der perspektivischen Darstellung der Fig. 1 bzw. der Draufsicht der Fig. 2 zu ersehen ist, im wesentlichen in Form eines Parallelogrammes ausgebildet, wobei obere und untere Verbindungsteile 33 bzw. 34 etwa waagrecht und vordere und hintere Verbindungsteile 31 bzw. 32 unter einem Winkel zur Senkrechten in der Größenordnung von etwa 40° verlaufen. Das untere Verbindungsteil 34 der Rahmenteile 3 hat an seinem in Fahrtrichtung gesehenen hinteren Ende einen Ansatz 35 mit Vierkantausschnitten 37 (siehe Fig. 4) zur Aufnahme von Befestigungsschrauben 38 und mit einer Bohrung 36 zum Befestigen eines Blinkers. Am in Fahrtrichtung gesehenen vorderen Ende 341 des unteren Verbindungsteils 34 jedes Rahmenteils 3 ist, wie im einzelnen in Fig. 3 dargestellt ist, ein in Längsrichtung geschlitzter und nach vorne konisch zulaufender Ansatz 342 ausgebildet, der etwas tiefer liegt als das untere Verbindungsteil 34.

Die Gepäckbrücke 4 ist, wie aus der perspektivischen Darstellung der Fig. 1 zu ersehen ist, in Draufsicht etwa rechtwinklig ausgebildet und weist eine Vielzahl Durchbrüche 41 sowie an ihren Längsseiten mehrere, vorzugsweise vier schlitzförmige Ausnehmungen 42 auf, in welche quadratische Sicherungsmuttern einschiebbar sind, in welche von unten durch Bohrungen 39 im oberen Verbindungsteil 33 des Rahmenteils geführte Schrauben befestigt werden. Da in dem oberen Verbindungsteil 33 nur drei Bohrungen bzw. Führungen 39, aber in der Gepäckbrücke 4 vorzugsweise vier schlitzförmige Ausnehmungen 42 ausgebildet sind, kann die Lage der Gepäckbrücke 4 bezüglich der Rahmenteile 3 um den Abstand zwischen zwei schlitzförmigen Ausnehmungen 42 in zwei unterschiedlichen Lagen befestigt werden, so daß die Gepäckbrücke an die Abmessungen der Heckpartie eines Motorrades in gewissem Umfang angepaßt werden kann.

Ferner ist in Fig. 1 noch ein Sicherungsteil 5 dargestellt, das über einen Kunststoffaden 51 und ein nicht näher dargestelltes Einklipsteil in einer am oberen Verbindungsteil 22 ausgebildeten Bohrung 52 gehaltert ist. Zur Sicherung der Rahmenteile 3 an den Packtaschenhalterungen 2 ist dieses Sicherungsteil 5 zwischen das untere Verbindungsteil 34 jedes Rahmenteils 3 und das obere Verbindungsteil 22 jeder Packtaschenhalterung in Fahrtrichtung gesehen vor dem Ansatz mit der Bohrung 52 einzuführen.

Hierdurch ist dann ein unbeabsichtigtes Verschieben der Rahmenteile und damit ein Herunterklappen der Gepäckbrücke 4 sicher verhindert.

In Fig. 3 ist das in Fahrtrichtung gesehen hintere, obere Ende einer Packtaschenhalterung 2 dargestellt, das an der Verbindungsstelle zwischen dem oberen Verbindungsteil 22 und dem hinteren leicht schrägen Verbindungsteil 24 einen in Fahrtrichtung gesehen nach hinten vorstehenden Ansatz mit den zwei Führungen 6 und 7 aufweist. Hierbei weist die obere Führung 6 einen in Verlängerung des oberen Verbindungsteils 22 etwa waagrecht verlaufenden Teil 61 auf, der in einen nach unter ausgerichteten Viertelkreis 62 übergeht. Die untere Führung 7 ist in einem vorgegebenen Abstand von dem waagrechten Teil 61 der oberen Führung angeordnet und weist nureinen diesem waagrechten Teil 61 entsprechenden waagrechten Teil auf. An dem in Fahrtrichtung gesehenen hinteren Ende ist in Fig. 3 ein Drehpunkt 71 angedeutet, um welchen die Rahmenteile 3 mit der sie verbindenden und an ihnen angebrachten Gepäckbrücke 4 bei deren einem Zurückklappen dieser Teile verschwenkt werden. Die Länge der unteren Führung 7 ist so bemessen, daß zum Umklappen der Gepäckbrücke 4 der konisch zulaufende Ansatz 342 am vorderen Ende 341 des unteren Verbindungsteils 34 der Rahmenteile 3 ausreichend weit (in Fahrtrichtung gesehen) nach hinten verschoben werden kann.

In Fig. 3 ist der Aufnahmebereich 221 für den geschlitzten und konisch zulaufenden Ansatz 341 am vorderen Ende des Verbindungsteils 34 jedes Rahmenteils 3 in Draufsicht und in Fig. 3a in einer Schnittansicht entlang der Linie A-A in Fig. 3 im einzelnen dargestellt. Der Aufnahmebereich 221 weist, wie insbesondere aus Fig. 3a zu ersehen ist, einen nach oben offenen Einführteil 222 und eine daran anschließende, zur Aufnahme des konisch zulaufenden Ansatzes 342 entsprechend ausgebildete, nach oben abgeschlossene Vertierung 223 auf. In Fahrtrichtung gesehen hinter dem Aufnahmebereich 221 ist ein Ansatz mit einer Bohrung 52 dargestellt, in welche ein Einklipsteil eingeklipst wird, welcher durch den Kunststoffaden 51 mit dem Sicherungsteil verbunden ist (siehe Fig. 1).

In Fig. 4 ist in einer vergrößerten Darstellung der untere Verbindungsteil 34 eines Rahmenteils 3 wiedergegeben. Am in Fahrtrichtung gesehen vorderen Ende 341 dieses Verbindungsteils 34 ist ein in Längsrichtung geschlitzter und (in Fahrtrichtung gesehen) nach vorne konisch zulaufender Ansatz 342 ausgebildet, welcher bezüglich des unteren Verbindungsteils 34 abgesetzt und etwas tiefer als der Verbindungsteil 34 angeordnet ist. Am in Fahrtrichtung gesehen hinteren Ende des Verbindungsteils 34 ist der Ansatz 35 ausgebildet, der an seinem hinteren Ende eine Verlängerung mit einer Bohrung 36 aufweist, zur Befastigung eines Blinkers. Im vorderen Teil des Ansatzes 34 sind zwei Vierkantlöcher 37 ausgebildet, durch welche die Befestigungsschrauben 38 gesteckt werden, mittels welchen der Rahmenteil 3 an der jeweiligen Packtaschenhalterung 2 befestigt wird.

In Fig. 2 ist in Draufsicht ein hochgeklappter Rahmenteil 3 mit der daran befestigten Gepäckbrücke 4 ausgezogen dargestellt. Ferner ist in Fig. 2 strichpunktiert der zurückgeklappte Rahmenteil 3 mit der Gepäckbrücke 4 dargestellt, wobei der Schwenkbereich von etwa 90° durch einen gestrichelten Viertelkreis angedeutet ist. Wenn die Rahmenteile 3 mit der sie verbindenden Gepäckbrücke 4 hochgeklappt sind, wie in der perspektivischen Darstellung der Fig. 1 gezeigt ist, sitzt der geschlitzte, konisch zulaufende Ansatz 342 jedes Rahmenteils 3 in der entsprechend ausgebildeten Vertiefung 323 des oberen Verbindungsteils 22 der jeweiligen Packtaschenhalterung 2. Hierbei ist durch die konische Ausbildung des Ansatzes 342 sowie der Vertiefung 232 eine gute Führung und Sicherung gewährleistet. Gleichzeitig kann ein gewisser Verschleiß an dem Ansatz 342 bzw. in der Vertiefung 223 ausgeglichen werden, indem der Ansatz 324 etwas weiter in die Vertiefung 223 hineingeschoben wird. Bei dem in Fig. 1 dargestellten Zustand der Rahmenteile 3 bezüglich der Packtaschenhalterungen 2 sind die Befestigungsschrauben 38 fest angezogen.

Als zusätzliche Sicherung wird noch das elastisch federnde Sicherungsteil 5 hinter dem Ansatz 342 zwischen die Unterseite des unteren Verbindungsteils 34 jedes Rahmenteils 3 und der Oberseite jedes oberen Verbindungsteils 22 jeder Packtaschenhalterung 2 eingeführt. Durch das Einführen und Einrasten des Sicherungsteils 5 an der vorstehend beschriebenen Stelle ist sichergestellt, daß die Rahmenteile 3 mit der an ihnen befestigten Gepäckbrücke 4 sich auch dann nicht nach hinten verschieben können, wenn sich die Befestigungsschrauben 38 lockern sollten bzw. wenn die Befestigungsschrauben 38 nach dem Hochklappen der Gepäckbrücke nicht fest genug angezogen worden sind.

Wenn nun beispielsweise die Sitzbank eines Motorrades hochgeklappt werden soll, an welchem die Halterungseinrichtung nach Fig. 1 angebracht ist, brauchen nur die vier Befestigungsschrauben 38 gelockert zu werden. Nach dem Lockern können die Rahmenteile 3 zusammen mit der sie verbindenden Gepäckbrücke nach hinten verschoben werden. Hierbei gleiten dann die gelockerten Befestigungsschrauben 38 in den entsprechenden Führungen 6 und 7, und der Ansatz 342 am vorderen Ende 341 jedes Rahmenteils 3 wird aus der Vertiefung 223 heraus so weit nach hinten verschoben, daß der Ansatz 342 im Bereich des nach oben offenen Einführteils liegt.

Nunmehr können dann die Rahmenteile 3 zusammen mit der Gepäckbrücke 4 um den Drehpunkt 71 nach hinten umgeklappt werden, wobei dann der Ansatz 342 außer Eingriff von dem Einführteil 222 kommt und die obere Befestigungsschraube 38 in dem Viertelkreis 62 der oberen Führung 6 gleitet. Nach einem Herunterklappen der Motorradsitzbank werden die vorbeschriebenen Vorgänge und Bewegungen in umgekehrter Reihenfolge durchgeführt, so daß nach dem Einführen des Ansatzes 342 in den Einführteil 222 und nach einem Vorschieben des Ansatzes 342 in die Vertiefung 223 nunmehr nur noch die vier Befestigungsschrauben 38 fest angezogen und das Sicherungsteil 5 in der beschriebenen Weise einzuführen ist.

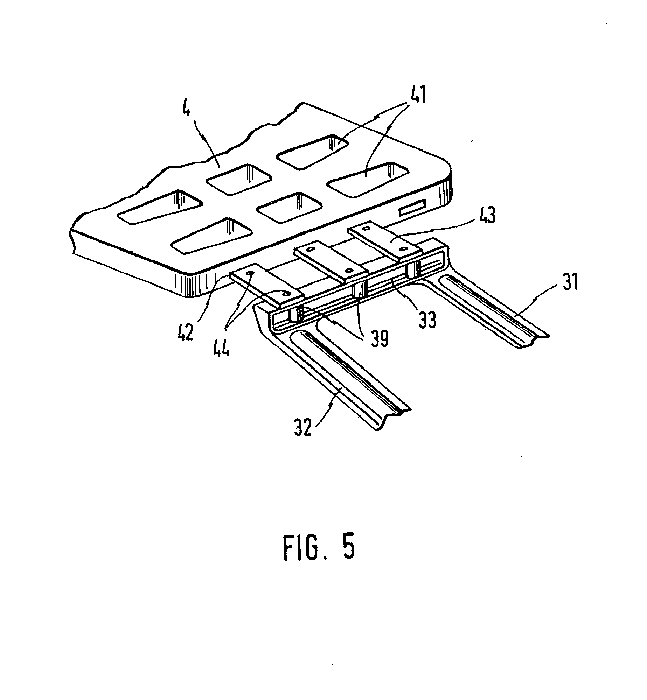

In Fig. 5 sind schematisch ein Teil einer Gepäckbrücke 4 sowie das obere Ende eines Rahmenteils 3 mit dessen Verbindungsteilen 31 bis 33 dargestellt. Vor den schlitzförmigen Ausnehmungen 42 in der Längsseite der Gepäckbrücke 4 sind drei Verlängerungsplättchen 43 dargestellt, die jeweils zwei mit Gewinde versehene Bohrungen 44 aufweisen. Damit bei einer besonders breiten Heckpartie eines Motorrades die Halterungseinrichtung 1 entsprechend angepaßt werden kann, werden statt der sonst zur Befestigung der Rahmenteile verwendeten Sicherungsmuttern die Verlängerungsplättchen 43 in die entsprechenden Schlitze 42 eingeschoben und entsprechend der geforderten Breite der Halterungseinrichtung mittels nicht näher dargestellten Schrauben in der Gepäckbrücke 4 gesichert. Die Rahmenteile 3 werden dann am äußeren Ende der Verbindungsplättchen 43 befestigt, indem nicht dargestellte Schrauben durch die Führungen 39 im oberen Verbindungsteil 33 eingeführt und in die äußeren, mit Gewinde versehenen Bohrungen 44 eingeschraubt werden. Durch die Verwendung solcher Verlängerungsplättchen kann, wie eingangs erwähnt, die Breite der Halterungseinrichtung 1 zusätzlich in einem Bereich von 34 cm bis 41 cm variiert werden.

**Patentansprüche**

1. Halterungseinrichtung für Motorräder, zum Anbringen von Packtaschen und Gepäckstücken sowie von Signaleinrichtungen u. ä., mit zwei seitlichen Packtaschenhalterungen (2), mit zwei an diesen Halterungen (2) angebrachten Rahmenteilen (3), die nach Lösen von Befestigungsschrauben (38) nach hinten verschiebbar sind, mit einer die Rahmenteile (3) verbindenden und an diesen angebrachten Gepäckbrücke (4) sowie mit einer verstellbaren, an den Packtaschenhalterungen (2) angebrachten Querverstrebung, dadurch gekennzeichnet, daß die Halterungseinrichtung (1) aus einem widerstandsfähigen, bruchfesten Kunststoff hergestellt ist, und daß nach Lösen der Befestigungsschrauben (38) und nach Verschieben der beiden seitlichen Rahmenteile (3) in jeweils zwei in den zugeordneten Packtaschenhalterungen (2) ausgebildeten Führungen (6, 7) nach hinten, die Rahmenteile (3) zusammen mit der diese (3) verbindenden Gepäckbrücke (4) um 90° klappbar sind.

2. Halterungseinrichtung nach Anspruch 1, dadurch gekennzeichnet, daß zum Verschieben und Umklappen der Rahmenteile (3) die zwei Führungen (6, 7), in denen die gelockerten Befestigungsschrauben (38) gleiten, jeweils am hinteren, oberen Ende der Packtaschenhalterungen (2) zueinander höhenversetzt ausgebildet sind.

3. Halterungseinrichtung nach Anspruch 2, dadurch gekennzeichnet, daß von den zwei Führungen (6, 7) am hinteren, oberen Ende der Packtaschenhalterungen (2) eine obere Führung (6) zuerst etwa waagrecht (61) in Verlängerung des oberen Verbindungsteils (22) der Packtaschenhalterungen (2) verläuft und dann in einen Viertelkreis (62) übergeht, während eine untere Führung (7) einen in einem vorgegebenen Abstand von der oberen Führung (6) ausgebildeten Teil aufweist, der parallel zum etwa waagrechten Teil (61) der oberen Führung (6) verläuft, so daß der in Fahrtrichtung hintere Bereich der unteren Führung (7) als Drehpunkt (71) beim Umklappen der Rahmenteile (2) dient.

4. Halterungseinrichtung nach Anspruch 1, dadurch gekennzeichnet, daß das in Fahrtrichtung vordere Ende (341) jedes unteren Verbindungsteils (34) der Rahmenteile (3) einen geschlitzten, nach vorne konisch zulaufenden Ansatz (342) aufweist, und daß der dem geschlitzten und konisch zulaufenden Ansatz (342) zugeordnete Bereich (221) auf beiden Seiten jedes oberen Verbindungsteils (22) der Packtaschenhalterung (2) eine in Fahrtrichtung hinten nach oben offene Einführung (222) und eine daran anschließende, zur Aufnahme des konisch zulaufenden Ansatzes (342) ausgebildete, oben geschlossene Vertiefung (223) aufweist.

5. Halterungseinrichtung nach Anspruch 1, dadurch gekennzeichnet, daß der widerstandsfähige, bruchfeste Kunststoff mit 30 bis 33 % Glasfaser verstärktes Polyamid 6 ist.

6. Halterungseinrichtung nach Anspruch 1. dadurch gekennzeichnet, daß zum Sichern der Rahmenteile (3) und der Gepäckbrücke (4) in deren hochgeklappter Stellung an jeder Gepäcktaschenhalterung (2) ein elastisch verformbares Sicherungsteil (5) angebracht (51, 52) ist, das nach einem Hochklappen und Vorschieben der Rahmenteile (3) hinter den geschlitzten, konisch zulaufenden Ansatz (342) zwischen der Unterseite des unteren Verbindungsteils (34) der Rahmenteile (3) und der Oberseite des oberen Verbindungsteils (22) jeder Gepäcktaschenhalterung (2) einführbar ist und in dieser Lage einrastet.

7. Halterungseinrichtung nach Anspruch 1, dadurch gekennzeichnet, daß zur Änderung der Breite der Halterungseinrichtung (1) auf beiden Längsseiten der Gepäckbrücke (4) schlitzförmige Ausnehmungen (42) ausgebildet sind, in welchen einstellbar entweder Sicherungsmuttern zum Befestigen der Rahmenteile (3) oder Verlängerungsplättchen (43) zum Verbreitern der Halterungseinrichtung (1) einschiebbar und befestigbar sind.

## Claims

1. Retaining equipment for motor cycles, for the mounting of saddle bags and pieces of luggage as well as of signalling equipments and similar, with two lateral saddle bag mountings (2), with two frame parts (3), which are attached at these mountings (2) and displaceable rearwardly after the loosening of fastening screws (38), with a luggage rack (4) connecting the frame parts (3) and attached at these as well as with a displaceable cross-bracing attached at the saddle bag mountings (2), characterised thereby, that the retaining equipment (1) consists of a resistant and fracture-resistant synthetic material and that, after loosening of the fastening screws (38) and after displacement of both the lateral frame parts (3) rearwardly in two respective guides (6, 7) formed in the associated saddle bag mountings (2), the frame parts (3) together with the luggage rack (4) connecting these (3) are tiltable through 90°.

2. Retaining equipment according to claim 1, characterised thereby, that for the displacing and tilting of the frame parts (3), the two guides (6, 7), in which the loosened fastening screws (38) slide, are each constructed to be relatively displaced in height at the rear upper end of the saddle bag mountings (2).

3. Retaining equipment according to claim 2, characterised thereby, that of the two guides (6, 7) at the rear upper end of the saddle bag mountings (2), an upper guide (6) initially extends about horizontally (61) in prolongation of the upper connecting part (22) of the saddle bag mountings (2) and then passes over into a quarter circle (62), while a lower guide (7) displays a part which is constructed at a predetermined spacing from the upper guide (6) and extends parallelly to the about horizontal part (61) of the upper guide (6) so that the region, which is to the rear in direction of travel, of the lower guide (7) serves as rotational centre (71) during the tilting of the frame parts (3).

4. Retaining equipment according to claim 1, characterised thereby, that end (341) of each lower connecting part (34) of the frame parts (3), which is to the front in direction of travel, displays a slotted projection (342) narrowing conically to the front and that the region (221), associated with the slotted and conically narrowing projection (342), on both sides of each upper connecting part (22) of the saddle bag mountings (2) displays an entry guide (222), which is upwardly open to the rear in direction of travel, and a depression (223) adjoining thereat, which is closed at the top and constructed for the reception of the conically narrowing projection (342).

5. Retaining equipment according to claim 1, characterised thereby, that the resistant and fracture-resistant synthetic material is polyamide 6 reinforced by 30 to 33 % of glass fibres.

6. Retaining equipment according to claim 1, characterised thereby, that for the securing of the frame parts (3) and the luggage rack (4) in their tilted-up position, an elastically deformable securing part (5) is attached (51, 52) et each saddle bag mounting (2), which part (5) — after a tilting-up and advancing of the frame parts (3) behind the slotted, conically narrowing projection (342) — is introduceable between the underside of the lower connecting part (34) of the frame parts (3) and the upper side of the upper connecting part (22) of each saddle bag mounting (2) and detents in this position.

7. Retaining equipment according to claim 1, characterised thereby, that for alteration of the width of the retaining equipment (1), slop-shaped recesses (42) are formed on both longitudinal sides of the luggage rack (4), in which recesses (42) either securing nuts for the fastening of the frame parts (3) or prolongation platelets (43) for the widening of the retaining equipment (1) are settably insertable and fastenable.

## Revendications

1. Dispositif de retenue équipant des motocyclettes, pour l'installation de sacoches et de porte-bagages ainsi que de dispositifs de signalisation et équipements analogues, comprenant deux supports latéraux (2) de sacoches, deux parties d'encadrement (3) qui sont montées sur ces supports (2) et peuvent coulisser vers l'arrière après le desserrage de vis de fixation (38), une galerie (4) porte-bagages reliant les parties d'encadrement (3) et installée sur ces dernières, ainsi qu'un entretoisement réglable monté sur les supports (2) de sacoches, caractérisé par le fait que ce dispositif de retenue (1) est fabriqué en une matière plastique robuste résistant à la rupture ; et par le fait que, après le desserrage des vis de fixation (38) et après que les deux parties latérales d'encadrement (3) ont coulissé vers l'arrière dans deux guides respectifs (6, 7) ménagés dans les supports de sacoches associés (2), les parties d'encadrement (3) peuvent être rabattues de 90° conjointement à la galerie (4) porte-bagages qui les relie.

2. Dispositif de retenue selon la revendication 1, caractérisé par le fait que, pour permettre le coulissement et le rabat des parties d'encadrement (3), les deux guides (6, 7) dans lesquels coulissent les vis de fixation desserrées (38) sont à chaque fois ménagés, avec décalage mutuel en hauteur, à l'extrémité postérieure supérieure des supports (2) de sacoches.

3. Dispositif de retenue selon la revendication 2, caractérisé par le fait que, parmi les deux guides (6, 7) situés à l'extrémité postérieure supérieure des supports (2) de sacoches, un guide supérieur (6) s'étend tout d'abord à peu près horizontalement (61) dans le prolongement de la pièce supérieure de jonction (22) des supports (2) de sacoches, puis se prolonge par un quart de cercle (62), tandis qu'un guide inférieur (7) présente une partie qui est ménagée à une distance prédéterminée du guide supérieur (6) et s'étend parallèlement à la partie sensiblement horizontale (61) de ce guide supérieur (6), de sorte que la région du guide inférieur (7), postérieure par rapport à la direction du déplacement, sert de point de rotation (71) lors du rabat des parties d'encadrement (2).

4. Dispositif de retenue selon la revendication 1, caractérisé par le fait que l'extrémité (341), antérieure dans la direction du déplacement, de chaque pièce inférieure de jonction (34) des parties d'encadrement (3) présente un appendice fendu (342) s'achevant tronconiquement vers l'avant ; et par le fait que la zone (221) associée à l'appendice fendu (342) s'achevant tronconiquement comporte, de part et d'autre de chaque pièce supérieure de jonction (22) du support (2) de sacoche, une gueule d'introduction (222) béant vers le haut et située à l'arrière dans la direction du déplacement, ainsi qu'un renfoncement (223) fermé en partie haute, qui se raccorde à ladite gueule et est réalisé pour recevoir l'appendice (342) s'achevant tronconiquement.

5. Dispositif de retenue selon la revendication 1, caractérisé par le fait que la matière plastique robuste et résistant à la rupture consiste en du polyamide 6, renforcé par entre 30 et 33 % de fibres de verre.

6. Dispositif de retenue selon la revendication 1, caractérisé par le fait qu'une pièce de fixation (5) déformable élastiquement, installée (51, 52) sur chaque support (2) de sacoche en vue d'arrêter les parties d'encadrement (3) et la galerie (4) porte-bagages dans leur position relevée par pivotement, peut être engagée derrière l'appendice fendu (342) s'achevant tronconiquement, entre la face inférieure de la pièce inférieure de jonction (34) des parties d'encadrement (3) et la face supérieure de la pièce supérieure de jonction (22) de chaque support (2) de sacoche, et s'encliquette dans cette position, après que lesdites parties d'encadrement (3) ont été relevées par pivotement et ont coulissé vers l'avant.

7. Dispositif de retenue selon la revendication 1, caractérisé par le fait que des évidements (42) en forme de fentes sont pratiqués sur les deux côtés longitudinaux de la galerie (4) porte-bagages afin de faire varier la largeur du dispositif de retenue (1), évidements dans lesquels peuvent être introduits et fixés, avec faculté d'ajustement, soit des écrous d'arrêt pour fixer les parties d'encadrement (3), soit des plaquettes de prolongement (43) pour élargir le dispositif de retenue (1).

FIG. 1

0 090 070

FIG. 2

2

# FIG. 3

A

A

61

6

62

71 7

52

222

221

22

223

24

0 090 070

3

## FIG. 3a

221

222

223

22

FIG. 4

FIG. 5